# EUROPEAN PATENT SPECIFICATION

(11) **EP 4 024 376 B1**
(45) Date of publication and mention of the grant of the patent: **09.08.2023**
(21) Application number: 21215996.6
(22) Date of filing: 20.12.2021
(51) Int. Cl.: G09F 19/12, G09F 19/22

(54) **INSTALLING AND POSITIONING METHOD FOR LIGHT COLUMNS OF TUNNEL MEDIA SYSTEM**
INSTALLATIONS- UND POSITIONIERUNGSVERFAHREN FÜR LICHTSÄULEN EINES TUNNELMEDIENSYSTEMS
PROCÉDÉ D'INSTALLATION ET DE POSITIONNEMENT POUR COLONNES LUMINEUSES DE SYSTÈME DE SUPPORT DE TUNNEL

(30) Priority: 31.12.2020 CN 202011640943
(43) Date of publication of application: 06.07.2022
(73) Proprietor: Beijing Jinri Hengsheng Technology Co., Ltd., Beijing 102600 (CN)
(72) Inventor: ZHAO, Xuejun, Beijing, 102600 (CN); LV, Min, Beijing, 102600 (CN); GAO, Hui, Beijing, 102600 (CN); WEI, Shoubing, Beijing, 102600 (CN)
(74) Representative: Botti & Ferrari S.p.A.

(56) References cited:
- CN-U- 203 809 985
- CN-Y- 2 580 549
- FR-A5- 2 208 569

## Description

### TECHNICAL FIELD

The present disclosure relates to a field of tunnel media system installation, and particularly relates to an installing and positioning method for light columns of a tunnel media system.

### BACKGROUND ART

Tunnel media, also called subway tunnel video media or subway cool media, are emerging high-tech advertising media. Subway tunnel video media belong to an international leading technology. The media are new concept digital image media which integrate electronic display, communication and computer image engineering, human eye vision persistence is utilized, high-performance LED light columns installed on the wall face of a tunnel are remembered, and the media are researched and developed comprehensively, so that passengers can see smooth dynamic video pictures on a subway train moving at a high speed and feel unexpected visual feast.

At present, when light columns of a tunnel media system are installed, an adjustable support is installed on the side wall of the tunnel firstly, then an upper row of beam steel angles and a lower row of beam steel angles are installed on the adjustable support, a plurality of installation holes are formed in each beam steel angle at intervals along the length direction of the beam steel angle, the light columns are installed at the positions of beam steel angle installation holes through bolts, the upper end and the lower end of one light column are installed in the installation holes in the corresponding positions of the two beam steel angles at the same time, and then installation of the light columns can be achieved. However, when the beam steel angles are fixedly connected to the adjustable support, if the installation holes in the corresponding positions of the upper beam steel angle and the lower beam steel angle are staggered, namely the two installation holes for installing the same light column are not in the same vertical plane, the installed light columns incline, and therefore the watching effect of passengers is affected. Therefore, how to ensure that the installation holes in the corresponding positions of the upper beam steel angle and the lower beam steel angle are located in the same vertical plane and reduce the probability that the installed light columns incline is a problem to be solved.

### SUMMARY

The present disclosure provides an installing and positioning method for light columns of a tunnel media system in order to enable installation holes in corresponding positions of two installed beam steel angles to be located in the same vertical plane and reduce the probability that the installed light columns incline.

The installing and positioning method for light columns of a tunnel media system provided by the present disclosure adopts the following technical schemes:

The installing and positioning method for light columns of a tunnel media system comprises the following steps:
S1, installing an adjustable support 5;
S2, installing a first group of beam steel angles, comprising following steps: forming installation holes in each beam steel angle at intervals along the length direction of each beam steel angle, firstly installing a first beam steel angle, called an upper beam steel angle, on a connecting plate on the upper side of the adjustable support, then installing a second beam steel angle, called a lower beam steel angle, on a connecting plate on the lower side of the adjustable support, and clamping the upper ends and the lower ends of a limiting measuring tool in the installation holes in the corresponding positions of the upper and lower beam steel angles respectively in which the limiting measuring tool is perpendicular to the two beam steel angles at the same time, and finally fixing the position of the beam steel angle located on the connecting plate on the lower side on the adjustable support; the limiting measuring tool comprises a first limiting plate attached to a side, away from the adjustable support, of the upper beam steel angle, a second limiting plate attached to a side, away from the adjustable support, of the lower beam steel angle, and a connecting plate arranged between the first limiting plate and the second limiting plate, a side, facing the upper beam steel angle, of the first limiting plate and a side, facing the lower beam steel angle, of the second limiting plate are fixedly connected with limiting columns, sections of the limiting columns are non-circular, and the limiting columns on the first limiting plate and the second limiting plate are respectively matched with the installation holes in the upper beam steel angle and the lower beam steel angle in an inserted mode; and a side, away from the connecting plate of the limiting measuring tool, of the first limiting plate is fixedly connected with a first clamping plate, a first positioning pin is inserted into the first clamping plate, the upper beam steel angle is located between the first positioning pin and the first limiting plate, a side, facing the connecting plate of the limiting measuring tool, of the second limiting plate is fixedly connected with a second clamping plate, a second positioning pin is inserted into the second clamping plate, and the lower beam steel angle is located between the second positioning pin and the second limiting plate;
S3, sequentially installing, side by side along the length direction of the tunnel media system, the rest of the groups of beam steel angles on the adjustable support in a likewise manner as shown in S2; and
S4, installing the light columns at the installation holes at the corresponding positions of the upper and lower beam steel angles.

By adopting the technical scheme, the upper end and the lower end of the limiting measuring tool are clamped in the installation holes of the beam steel angles, and the limiting measuring tool is perpendicular to the two beam steel angles at the same time, so that the installation holes in the two beam steel angles are located in the same vertical plane, namely the upper end and the lower end of the light column installed at the installation holes in the corresponding positions are located in the same vertical plane, and the probability that the installed light columns incline is reduced.

Optionally, the beam steel angles located at the upper part are called upper beam steel angles, the beam steel angles located at the lower part are called lower beam steel angles, the limiting measuring tool comprises a first limiting plate attached to the side, away from the adjustable support, of the upper beam steel angle, a second limiting plate attached to the side, away from the adjustable support, of the lower beam steel angle, and a connecting plate arranged between the first limiting plate and the second limiting plate, the side, facing the upper beam steel angle, of the first limiting plate and the side, facing the lower beam steel angle, of the second limiting plate are fixedly connected with limiting columns, the sections of the limiting columns are non-circular, and the limiting columns on the first limiting plate and the second limiting plate are respectively matched with the installation holes in the upper beam steel angle and the lower beam steel angle in an inserted mode.

By adopting the technical scheme, the limiting columns are non-circular, the limiting columns are inserted into the installation holes, the connecting plate can be perpendicular to the upper beam steel angle and the lower beam steel angle at the same time, and the positions of the installation holes in the upper beam steel angle and the lower beam steel angle are located in the same vertical plane, so that the installation holes in the corresponding positions of the upper beam steel angle and the lower beam steel angle are guaranteed to be located in the same vertical plane through the limiting measuring tool.

Optionally, the side, away from the connecting plate, of the first limiting plate is fixedly connected with a first clamping plate, a first positioning pin is inserted into the first clamping plate, the upper beam steel angle is located between the first positioning pin and the first limiting plate, the side, facing the connecting plate, of the second limiting plate is fixedly connected with a second clamping plate, a second positioning pin is inserted into the second clamping plate, and the lower beam steel angle is located between the second positioning pin and the second limiting plate.

By adopting the technical scheme, the upper beam steel angle can be clamped between the first positioning pin and the first clamping plate through the first positioning pin, so that the position of the upper beam steel angle is fixed, and the upper beam steel angle is prevented from sliding down from the limiting column under the action of external force; and the lower beam steel angle can be clamped between the second positioning pin and the second clamping plate through the second positioning pin, so that the position of the lower beam steel angle is fixed, and the lower beam steel angle is prevented from sliding down from the limiting column under the action of external force.

Optionally, S3 specifically comprises the following step:
S31, determining the distance between two adjacent upper beam steel angles and the distance between two adjacent lower beam steel angles through horizontal measuring tools.

By adopting the technical scheme, the distance between the two adjacent upper beam steel angles and the distance between the two adjacent lower beam steel angles can be fixed through the horizontal measuring tool, and the situation that the distance between the two adjacent upper beam steel angles or the two adjacent lower beam steel angles is too large or too small, so that the overall length of the tunnel media system is affected is avoided.

Optionally, the horizontal measuring tool comprises a clamping plate which is integrally U-shaped, the clamping plate is connected to the opposite ends of two adjacent upper beam steel angles or two adjacent lower beam steel angles, and the clamping plate is provided with a fixed part for fixing the upper beam steel angle or the lower beam steel angle in the clamping plate.

By adopting the technical scheme, the opposite ends of the two adjacent upper beam steel angles or the two adjacent lower beam steel angles are embedded into the U-shaped openings of the clamping plates and fixed through the fixed parts, so that the two adjacent upper beam steel angles or the two adjacent lower beam steel angles can be connected together, and the connected upper beam steel angles or the connected lower beam steel angles are located on the same straight line.

Optionally, the clamping plate comprises a main plate and two side plates perpendicularly and fixedly connected to the two sides of the main plate, the fixed part comprises a clamping column arranged on the side, facing the side plate, of the main plate, and the clamping column is matched with the installation hole in an inserted mode.

By adopting the technical scheme, the position of the upper beam steel angle relative to the clamping plate or the position of the lower beam steel angle relative to the clamping plate can be fixed by embedding the clamping columns into the installation holes.

Optionally, the fixed part further comprises a limiting pin connected to one of the side plates in an inserted mode, and the upper beam steel angle or the lower beam steel angle is located between the limiting pin and the main plate.

By adopting the technical scheme, the upper beam steel angle or the lower beam steel angle can be clamped in the U-shaped groove of the clamping plate through the limiting pin, and the upper beam steel angle or the lower beam steel angle is prevented from sliding out of the U-shaped groove of the clamping plate under the action of external force.

Optionally, S3 further comprises the following step:
S32, detecting the relative positions of the upper beam steel angle and the lower beam steel angle of each group through the limiting measuring tool, so that the two installation holes of the same group are located in the same vertical plane, and then fixing the positions of the upper beam steel angle and the lower beam steel angle of the group on the adjustable support.

By adopting the technical scheme, the upper beam steel angle and the lower beam steel angle of each group are detected by the limiting measuring tool, so that the installation holes in the corresponding positions of the upper beam steel angle and the lower beam steel angle of each group are ensured to be in the same vertical plane, and dislocation caused by installation errors is avoided.

Optionally, S3 further comprises the following step:
S33, connecting two adjacent upper beam steel angles or two adjacent lower beam steel angles through assembly plates, and then taking down the horizontal measuring tools between the two adjacent upper beam steel angles or the two adjacent lower beam steel angles.

By adopting the technical scheme, the two adjacent upper beam steel angles and the two adjacent lower beam steel angles can be installed and connected through the assembly plate.

Preferably, S3 specifically comprises the following steps:
S 11, placing a trolley on a track, installing a tripod on the trolley, installing a level gauge on the tripod, and installing a limiting tool on the trolley, wherein the limiting tool is perpendicular to the trolley;
S12, installing an adjustable support on the side wall of a tunnel, and adjusting the level gauge, so that laser rays emitted by the level gauge are located at the fixed position of the adjustable support;
S13, adjusting the adjustable support, so that the linear distance from the upper end of the adjustable support to the limiting tool is the same as that from the lower end of the adjustable support to the limiting tool; and
S14, pushing the trolley to advance on the track, installing a next adjustable support, so that the laser rays emitted by the level gauge are located at the fixed positions of the adjustable support, the linear distance from the upper end of the adjustable support to the limiting tool is the same as that from the lower end of the adjustable support to the limiting tool, and circulation is conducted in sequence until all the adjustable supports are installed completely.

By adopting the technical scheme, the trolley is pushed to run on the track, and the level gauge runs on the track along with the trolley, so that a line with the radian consistent with that of the track is marked on the side wall of the tunnel, and a connecting line at the same position of a plurality of installed light columns is parallel to the upper surface of the track. The limiting tool can simulate the train running on the track, the inclination degree of the limiting tool is consistent with that of the train running on the track, the linear distances from the upper end and the lower end of the adjustable support to the limiting tool are the same by adjusting the adjustable support, and then the light columns can be parallel to the limiting tool. At the moment, the installed light columns are parallel to the train window, and the distances between the light columns and the train window are consistent, so that the change of the angles and the distances between the light columns and the train window when the train runs on a curve road section is reduced, and after the tunnel media system is installed in the section with the curve, the program display effect is very good.

In summary, the present disclosure has at least one of the following beneficial technical effects:
firstly, the upper end and the lower end of the limiting measuring tool are clamped in the installation holes of the upper beam steel angle and the lower beam steel angle respectively, and the limiting connecting tool is perpendicular to the two beam steel angles at the same time, so that the installation holes in the corresponding positions of the upper beam steel angle and the lower beam steel angle are located in the same vertical plane, and the probability that the installed light columns incline is greatly reduced;
secondly, the distance between two adjacent upper beam steel angles or two adjacent lower beam steel angles can be fixed through the arrangement of the horizontal measuring tool, and the distance between every two adjacent upper beam steel angles or every two adjacent lower beam steel angles is ensured to be constant, so that the length of the installed tunnel media system is fixed, and the influence on the overall length of the tunnel media system due to the fact that the distance between two adjacent upper beam steel angles or two adjacent lower beam steel angles is too large or too small is avoided; and
thirdly, the two adjacent upper beam steel angles or the two adjacent lower beam steel angles can be fixed through the assembly plate, and the assembly and disassembly are very convenient.

### BRIEF DESCRIPTION OF THE DRAWINGS

FIG. 1 is a schematic diagram of the whole process in the present disclosure;
FIG. 2 is a state schematic diagram of a limiting tool, a level gauge and a tripod installed on a trolley;
FIG. 3 is a structural schematic diagram of limiting parts;
FIG. 4 is a structural schematic diagram after light columns are installed on a tunnel;
FIG. 5 is a schematic diagram of the installation relation of light columns, beam steel angles and adjustable supports;
FIG. 6 is a structural schematic diagram of an adjustable support;
FIG. 7 is an exploded schematic diagram of an adjustable support;
FIG. 8 is a structural schematic diagram of limiting measuring tools and horizontal measuring tools;
FIG. 9 is a partial exploded schematic diagram in another angle of view;
FIG. 10 is a partial sectioning schematic diagram of the connected relation of a limiting column and a first limiting plate on a limiting measuring tool; and
FIG. 11 is a structural schematic diagram of an operating panel and second clamping grooves on a limiting measuring tool.

Reference signs in the attached figures: 1, trolley; 11, installation rack; 111, beam; 112, support beam; 113, connecting beam; 114, installation groove; 12, idler wheel; 121, baffle plate; 13, limiting part; 131, sliding block; 132, screw; 133, locking nut; 2, tripod; 21, installation clamp; 22, leg; 3, level gauge; 4, limiting tool; 41, placing rack; 42, limiting rod; 43, placing plate; 431, inserted hole; 5, adjustable support; 51, upper foundation plate; 52, lower foundation plate; 53, connecting rod; 531, third installation hole; 532, fourth waist-shaped hole; 54, connecting plate; 55, first upper connecting plate; 551, first waist-shaped hole; 56, second upper connecting plate; 561, first installation hole; 562, third waist-shaped hole; 57, first lower connecting plate; 571, second waist-shaped hole; 58, second lower connecting plate; 581, second installation hole; 582, fourth installation hole; 591, first adjusting bolt; 592, first adjusting nut; 593, second adjusting bolt; 594, second adjusting nut; 595, third adjusting bolt; 596, third adjusting nut; 597, fourth adjusting bolt; 598, fourth adjusting nut; 6, beam steel angle; 61, connecting part; 62, fixed part; 63, installation hole; 64, upper beam steel angle; 65, lower beam steel angle; 7, light column; 8, limiting measuring tool; 81, first limiting plate; 82, second limiting plate; 83, connecting plate; 84, limiting column; 841, clamping column; 842, screw; 843, screw cap; 844, clamping ring; 845, operating panel; 846, gasket; 847, abutting screw; 85, first auxiliary plate; 86, second auxiliary plate; 87, first clamping plate; 871, first positioning pin; 88, second clamping plate; 881, second positioning pin; 891, first clamping groove; 892, second clamping groove; 9, horizontal measuring tool; 91, clamping plate; 911, main plate; 912, side plate; 92, fixed part; 921, clamping column; 922, limiting pin; 93, avoiding groove; 94, assembly plate; 941, assembly hole; 95, connecting bolt; and 96, connecting nut.

### DETAILED DESCRIPTION OF THE EMBODIMENTS

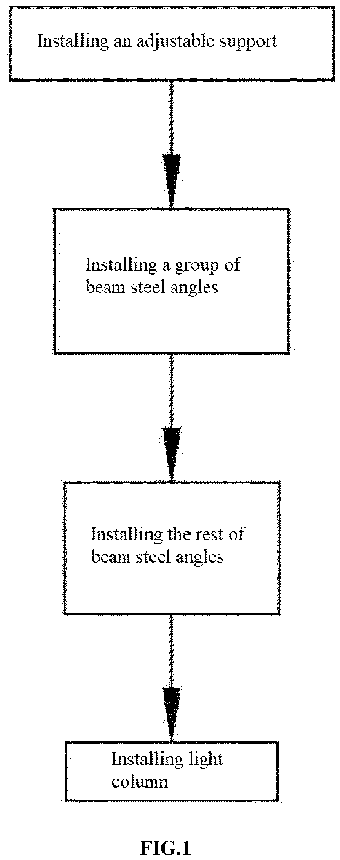

The following describes the present disclosure in detail with reference to FIG. 1 to FIG. 11.

The embodiment of the present disclosure discloses an installing and positioning method for light columns of a tunnel media system. Referring to FIG. 1, the installing and positioning method for light columns of a tunnel media system comprises the following steps:
S1, installing an adjustable support 5;
When a train runs on a curve road section, due to the fact that the curve outer track is ultrahigh, one side of the train is high, the other side of the train is low, meanwhile, the center line of the train inclines, train windows of the train and light columns 7 of the tunnel media system installed on the outer wall of a tunnel also inclined, and the angles and the distances of the light columns 7 relative to the train windows are changed, and the display effect of the light columns 7 seen by passengers in the train is seriously influenced. In order to reduce the change of the angles and the distances of the light columns 7 relative to the train windows when the train runs on the curve road section, the display effect of the program is very good after the tunnel media system is installed in the section with the curve. During installation, the adjustable support 5 needs to be adjusted so that no matter how the train changes in inclination, the angles and distances between the sides, close to the train, of the adjustable supports 5 and the train are the same, and the angles and distances between the light columns 7 installed on the adjustable supports 5 and the train are the same. Therefore, the step of adjusting the angle of the adjustable supporting 5 when the adjustable support 5 is installed specifically comprises the following steps:
S11, placing a trolley 1 on a track, installing a tripod 2 on the trolley 1, installing a level gauge 3 on the tripod 2, and installing a limiting tool 4 on the trolley 1, wherein the limiting tool 4 is perpendicular to the trolley 1.

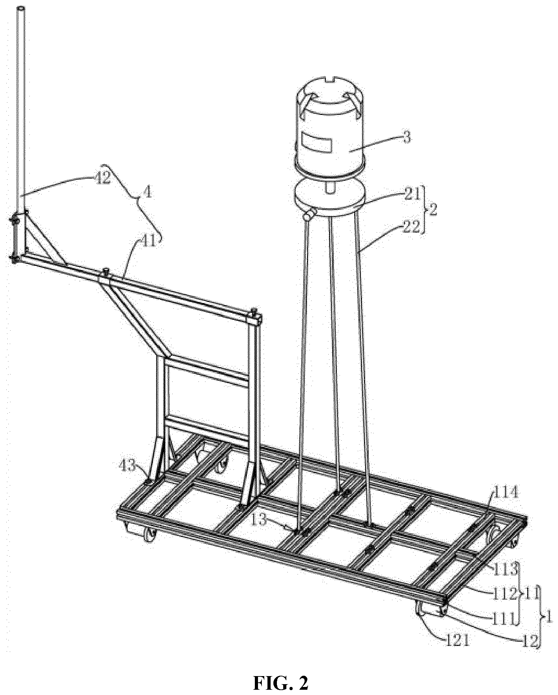

Referring to FIG. 2, the tripod 2 comprises an installation clamp 21 and three legs 22 hinged to the lower side of the installation clamp 21, and the level gauge 3 can be installed on the installation clamp 21 directly. Wherein, the specific fixed mode of the level gauge 3 and the tripod 2 in the prior art is not described in detail here.

The trolley 1 comprises an installation rack 11 and four idler wheels 12 rotatably connected to the lower side of the installation rack 11, wherein two idler wheels 12 in a group are located at two ends of the installation rack 11 respectively, and the tripod 2 is installed on the installation rack 11. When in use, the two groups of idler wheels 12 are directly placed on two tracks of the train respectively, the two idler wheels 12 in the same group are placed on the same track, and then the idler wheels 12 are pulled to run on the tracks, so that the train can be simulated to run on the tracks. Wherein, the baffle plate 121 is fixedly connected to the side, close to the other group of idler wheels 12, of each idler wheel 12 in order to prevent the idler wheels 12 from slipping off from the tracks, and when the idler wheels 12 are placed on the tracks, the baffle plate 121 also abuts against one side of the track, so that the positions of the idler wheels 12 on the tracks are fixed, and the idler wheels 12 are prevented from slipping off from the tracks during movement.

The installation rack 11 comprises two beams 111 and a plurality of support beams 112 fixedly connected between the two beams 111, the support beams 112 are arranged at intervals along the length directions of the beams 111, a connecting beam 113 is further fixedly connected between two adjacent support beams 112, and the multiple support beams 112 can be connected through the connecting beams 113. Installation grooves 114 with inverted T-shaped sections are formed in the upper sides of the beams 111, the support beams 112 and the connecting beams 113, specifically, the beams 111, the support beams 112 and the connecting beams 113 can be made of aluminum profiles, and remachining of the beams 111, the support beams 112 and the connecting beams 113 can be avoided. During installation, the three legs 22 on the tripod 2 are directly inserted into the installation grooves 114, and meanwhile, limiting parts 13 for fixing the positions of the legs 22 in the installation grooves 114 are arranged in the installation grooves 114.

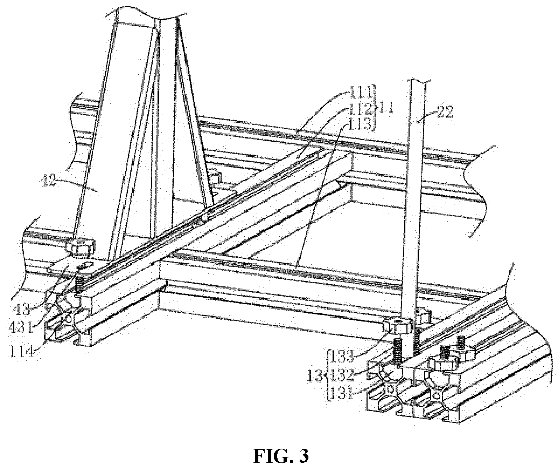

Referring to FIG. 2 and FIG. 3, the limiting parts 13 comprises a plurality of sliding blocks 131 slidingly connected in the installation grooves 114, two sliding blocks 131 are in a group, and the two sliding blocks 131 are located on two sides of the leg 22 for clamping the leg 22. Each sliding block 131 is fixedly connected with a screw 132, each screw 132 is in threaded connection with a locking nut 133, and when the locking nut 133 is unscrewed, the sliding block 131 can slide in the installation groove 114, so that the sliding block 131 is moved to any position; when the sliding blocks 131 are moved to the two sides of the legs 22, the locking nuts 133 are directly screwed, and the locking nuts 133 abut against the upper surfaces of the support beams 112 or the connecting beams 113, so that the positions of the sliding blocks 131 in the installation grooves 114 are fixed, and the positions of the legs 22 in the installation grooves 114 are fixed through the two sliding blocks 131.

Referring to FIG. 2 and FIG. 3, the limiting tool 4 comprises a placing rack 41 and a limiting rod 42 installed on the placing rack 41 by means of a hoop, the limiting rod 42 is perpendicular to the installation rack 11, and the limiting rod 42 also tilts when the installation rack 11 tilts due to the overheight of the outer track when the trolley 1 runs on the tracks, so that the tilting condition of the train running at the overheight position of the outer track is simulated. Wherein, the placing rack 41 is fixed on the installation rack 11 through the limiting parts 13. Specifically, a placing plate 43 is fixedly connected to the lower end of the placing rack 41, inserted holes 431 for the screws 132 to penetrate through are formed in the placing plate 43, the locking nuts 133 are located on the side, away from the installation frame 11, of the placing plate 43, the inserted holes 431 in the placing rack 41 are arranged on the screws 132 in a sleeving mode, then the locking nuts 133 are screwed, and then the position of the placing plate 43 can be fixed through the locking nuts 133, so that the position of the limiting tool 4 on the trolley 1 is fixed.

S12, installing an adjustable support 5 on the side wall of a tunnel, and adjusting the level gauge 3, so that laser rays emitted by the level gauge 3 are located at the fixed position of the adjustable support 5. Wherein, the installation position of the adjustable support 5 is the position of a previously determined installation base line, the base line is determined by adjusting the level gauge 3 to be in an oblique line mode and then pushing the trolley 1, and the trolley 1 drives the level gauge 3 to draw a line with the radian consistent with that of the track on the side wall of the tunnel, so that the determined installation base line is parallel to the upper surfaces of the tracks.

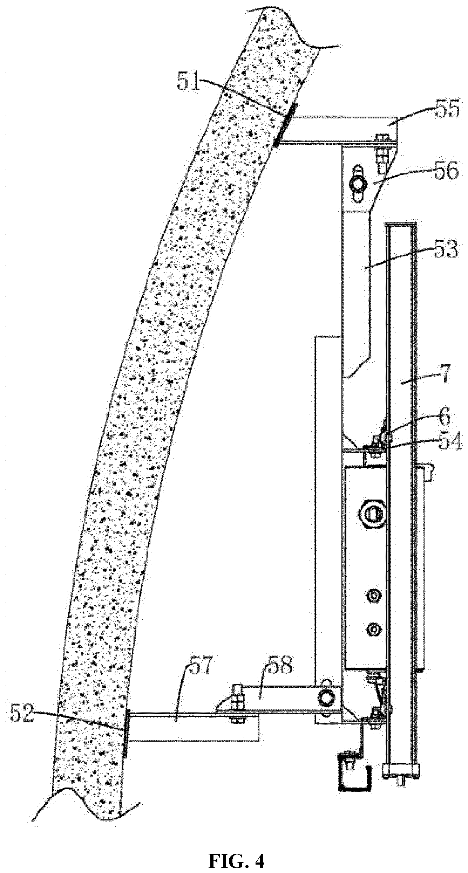

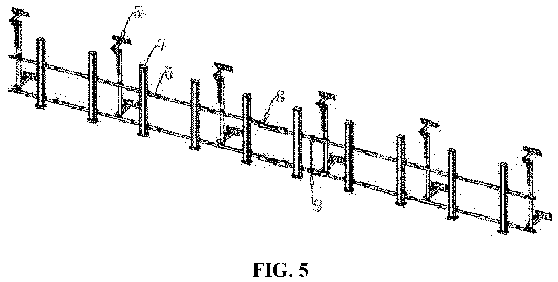

Referring to FIG. 4 and FIG.5, a plurality of adjustable supports 5 are arranged at intervals along the length direction of the tunnel, the adjustable support comprises an upper foundation plate 51 used for being fixedly connected with the side wall of the tunnel, a lower foundation plate 52 used for being fixedly connected with the side wall of the tunnel and a connecting rod 53 arranged between the upper foundation plate 51 and the lower foundation plate 52, two connecting plates 54 are fixedly connected to the connecting rod 53, the two connecting plates 54 are perpendicularly and fixedly connected to the side, away from the upper foundation plate 51 and the lower foundation plate 52, of the connecting rod 53, the two connecting plates 54 are arranged at intervals along the length direction of the connecting rod 53, the two connecting plates 54 are used for being connected with the light columns 7, and the distances between the two connecting plates 54 and the limiting tool 4 are adjusted, namely, the distance between the installed light columns 7 relative to the train windows can be determined.

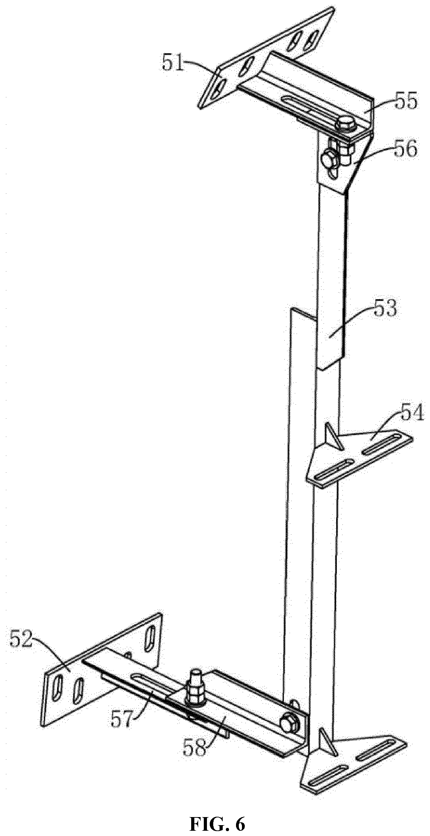

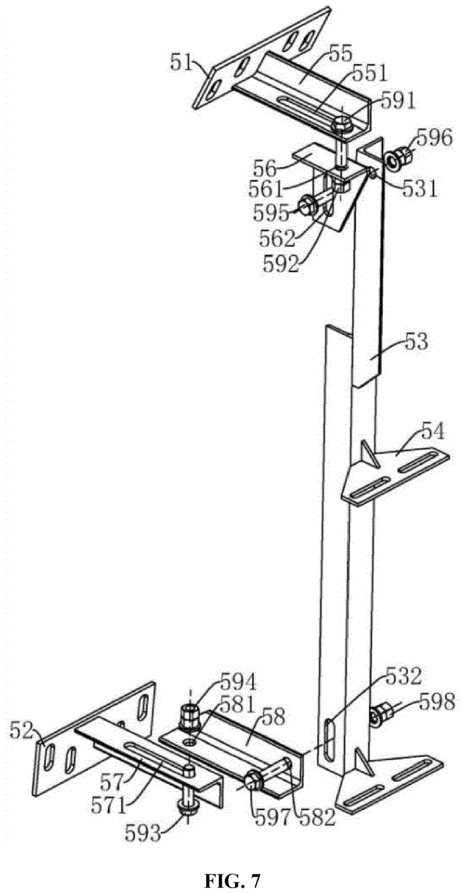

Referring to FIG. 6 and FIG. 7, a first upper connecting plate 55 is fixedly connected to the side, away from the side wall of the tunnel, of the upper foundation plate 51, a second upper connecting plate 56 is horizontally and slidably connected to one side of the first upper connecting plate 55, the upper end of the connecting rod 53 is connected with the second upper connecting plate 56, and the distance from the upper end of the connecting rod 53 to the limiting tooling 4 (referring to FIG. 2) can be adjusted by sliding the position of the second upper connecting plate 56 on the first upper connecting plate 55. Specifically, a first waist-shaped hole 551 is formed in the first upper connecting plate 55, the length direction of the first waist-shaped hole 551 is consistent with the length of a straight line between the side wall of the tunnel and the limiting tool 4, a first installation hole 561 is formed in the second upper connecting plate 56, a first adjusting bolt 591 is installed in the first waist-shaped hole 551 and the first installation hole 561, the first adjusting bolt 591 is in threaded connection with a first adjusting nut 592, and the positions of the first upper connecting plate 55 and the second upper connecting plate 56 can be fixed through the first adjusting bolt 591 and the first adjusting nut 592. When the first adjusting bolt 591 is operated to slide in the first waist-shaped hole 551, the first adjusting bolt 591 can drive the second upper connecting plate 56 to slide in the first waist-shaped hole 551 through the side wall of the first installation hole 561, and therefore horizontal sliding fit between the second upper connecting plate 56 and the first upper connecting plate 55 is achieved.

A first lower connecting plate 57 is fixedly connected to the side, away from the side wall of the tunnel, of the lower foundation plate 52, a second lower connecting plate 58 is horizontally and slidably connected to one side of the first lower connecting plate 57, the lower end of the connecting rod 53 is connected with the second lower connecting plate 58, and by sliding the position of the second lower connecting plate 58 on the first lower connecting plate 57, the lower end of the connecting rod 53 can be driven to move along the length direction of the first lower connecting plate 57, and therefore the distance between the lower end of the connecting rod 53 and the limiting tool 4 is adjusted. Specifically, a second waist-shaped hole 571 is formed in the first lower connecting plate 57, a second installation hole 581 is formed in the second lower connecting plate 58, a second adjusting bolt 593 is installed in the second waist-shaped hole 571 and the second installation hole 581, and the second adjusting bolt 593 is in threaded connection with a second adjusting nut 594. The position of the second lower connecting plate 58 on the first lower connecting plate 57 can be fixed through the second adjusting bolt 593 and the second adjusting nut 594, meanwhile, the second adjusting bolt 593 is operated to slide in the second waist-shaped hole 571, the second adjusting bolt 593 drives the second lower connecting plate 58 to slide along the length direction of the second wait-shaped hole 571 through the hole wall of the second installation hole 581, and therefore, horizontal sliding fit between the second lower connecting plate 58 and the first lower connecting plate 57 is achieved. By simultaneously operating the second upper connecting plate 56 to slide along the length direction of the first upper connecting plate 55 and the second lower connecting plate 58 to slide along the length direction of the first lower connecting plate 57, the distance between the connecting rod 53 and the limiting tool 4 can be adjusted, so that the distances between the two connecting plates 54 perpendicularly and fixedly connected to the connecting rod 53 and the limiting tool 4 are the same.

The upper end and the lower end of the connecting rod 53 are in vertical sliding fit with the second upper connecting plate 56 and the second lower connecting plate 58 respectively, the height of the connecting plate 54 fixedly connected to the connecting rod 53 can be adjusted by operating the upper end and the lower end of the connecting rod 53 to perpendicularly slide on the second upper connecting plate 56 and the second lower connecting plate 58, and therefore the heights of the light columns 7 installed on the connecting plate 54 are adjusted. Specifically, a vertical third waist-shaped hole 562 is formed in the second upper connecting plate 56, a third installation hole 531 is formed in the upper end of the connecting rod 53, a third adjusting bolt 595 is installed in the third waist-shaped hole 562 and the third installation hole 531, the third adjusting bolt 595 is in threaded connection with a third adjusting nut 596, the position between the connecting rod 53 and the second upper connecting plate 56 can be fixed through the third adjusting bolt 595 and the third adjusting nut 596, and the height of the upper end of the connecting rod 53 can be adjusted by operating the third adjusting bolt 595 to slide in the third waist-shaped hole 562. A fourth installation hole 582 is formed in the second lower connecting plate 58, a vertical fourth waist-shaped hole 532 is formed in the lower end of the connecting rod 53, a fourth adjusting bolt 597 is installed in the fourth waist-shaped hole 532 and the fourth installation hole 582, the fourth adjusting bolt 597 is in bolted connection with a fourth adjusting nut 598, the position between the lower end of the connecting rod 53 and the second lower connecting plate 58 can be fixed through the fourth adjusting bolt 597 and the fourth adjusting nut 598, and the height of the lower end of the connecting rod 53 can be adjusted by operating the fourth adjusting bolt 597 to slide in the fourth waist-shaped hole 532. Meanwhile, when the second upper connecting plate 56 is adjusted to slide on the first upper connecting plate 55 or the second lower connecting plate 58 is adjusted to slide on the first lower connecting plate 57, the upper end of the connecting rod 53 also rotates around the third adjusting bolt 595, and the lower end of the connecting rod 53 also rotates around the fourth adjusting bolt 597, so that the inclination degree of the connecting rod 53 is adjusted, and the connecting rod 53 is parallel to the limiting tool 4, namely, the light columns installed on the two connecting plates 54 are parallel to the train windows.

During installation, the positions of the first adjusting bolt 591 in the middle of the first waist-shaped hole 551 and the second adjusting bolt 593 in the middle of the second waist-shaped hole 571 are adjusted in advance, then the positions of the third adjusting bolt 595 in the middle of the third waist-shaped hole 562 and the fourth adjusting bolt 597 in the middle of the fourth waist-shaped hole 532 are adjusted, then the upper foundation plate 51 and the lower foundation plate 52 are installed and fixed, and the first adjusting bolt 591, the second adjusting bolt 593, the third adjusting bolt 595 and the fourth adjusting bolt 597 are all adjusted to the middle positions, so that the installed adjustable supports 5 can be correspondingly and accurately adjusted subsequently.

When the level gauge 3 is adjusted, the level gauge 3 is adjusted in an oblique line mode. When the level gauge 3 is in a straight line mode, on the premise that the relative height of the level gauge 3 is not changed, the horizontal lines emitted by the level gauge 3 within 3 degrees of the inclination angle are completely overlapped. When the inclination angle exceeds 3 degrees, relative positions of the laser rays emitted by the level gauge 3 are linearly lifted or lowered. Therefore, when the level gauge 3 is used in a straight line mode, certain errors are generated. When the level gauge 3 is adjusted in an oblique line mode and the track changes slightly in radian, the laser rays emitted by the level gauge 3 changes correspondingly, so that the radians of the laser rays emitted by the level gauge 3 are consistent with those of the tracks. Therefore, when the tracks change little, the laser rays emitted by the level gauge 3 do not change, and errors between the emitted laser rays and the radians of the tracks can be avoided.

The present disclosure discloses a method for adjusting the oblique line mode of a Leocel LS639 type level gauge 3 by taking the Leocel LS639 type level gauge 3 as an example, firstly, when a bubble in the level gauge 3 is adjusted to be in the middle position, a switch of the level gauge 3 is turned on, three keys of V1, V2and H on the level gauge 3 are pressed, the height of the tripod 2 is adjusted to a required installation height, and in the disclosure, the laser lines are adjusted to hit at the center position of the connecting plate 54 at the upper part of the connecting rod 53. Then, the switch of the level gauge 3 is turned off, the key of oblique line mode on the level gauge 3 is pressed down, and the three keys of V1, V2 and H of the level gauge 3 are pressed down again. At this point, another red "+" appears on the connecting plate 54 at the upper part of the connecting rod 53; next, any two legs of the tripod 2 are adjusted so that the center of the cross laser rays emitted by infrared rays of the level gauge 3 is located at the center of the connecting plate 54 at the upper part of the connecting rod 53, which is the installation height in the oblique line mode. The level gauge 3 is driven by the trolley 1 to run on the tracks, and the level gauge 3 can draw a line parallel to the upper surfaces of the tracks, so that the adjustable support 5 can be conveniently positioned during installation.

S13, adjusting the adjustable support 5, so that the linear distance from the upper end of the adjustable support 5 to the limiting tool 4 is the same as that from the lower end of the adjustable support 5 to the limiting tool 4.

Specifically, after the upper foundation plate 51 and the lower foundation plate 52 are fixed to the side wall of the tunnel through anchor bolts, the centers of the laser rays emitted by the level gauge 3 are located at the center of the connecting plate 54 located at the upper end of the connecting rod 53 by adjusting the height of the connecting rod 53, and meanwhile a first mark and a second mark are made on the limiting tool 4 through a marking pen or adhesive tape and the like, and then the linear distance between the two connecting plates 54 to the limiting rod 42, namely, the distance between the connecting plate 54 located at the upper end of the connecting rod 53 and the first marking, and the distance between the connecting plate 54 located at the lower end of the connecting rod 53 and the second mark, are measured by a box ruler. The first adjusting bolt 591 is adjusted to slide in the first waist-shaped hole 551, and the second adjusting bolt 593 is adjusted to slide in the second waist-shaped hole 571, so that the distances between the two connecting plates 54 and the limiting rod 42 are consistent, and at the moment, the first adjusting bolt 591, the second adjusting bolt 593, the third adjusting bolt 595 and the fourth adjusting bolt 597 are locked, so that the installation of the adjustable bracket 5 can be completed.

S14, pushing the trolley 1 to advance on the track, installing a next adjustable support 5, so that the laser rays emitted by the level gauge 3 are located at the fixed positions of the adjustable support 5, the linear distance from the upper end of the adjustable support 5 to the limiting tool 4 is the same as that from the lower end of the adjustable support 5 to the limiting tool 4, and circulation is conducted in sequence until all the adjustable supports 5 are installed completely.

When each adjustable support 5 is installed, the adjustable supports 5 need to be installed on an installation base line determined in the earlier stage, the connecting rod 53 is adjusted so that the laser rays emitted by the level gauge 3 are located in the middle of the connecting plate 54 located at the upper end of the connecting rod 53, then the distance between one connecting plate 54 located at the upper end of the connecting rod 53 and the first mark and the distance between the other connecting plate 54 at the lower end of the connecting rod 53 and the second mark are measured through the box ruler, by adjusting the position of the first adjusting bolt 591 in the first waist-shaped hole 551 and the position of the second adjusting bolt 593 in the second waist-shaped hole 571, the distances between the two connecting plates 54 on each adjustable support 5 and the limiting rod 42 are equal, and therefore, each installed light column 7 is parallel to the train window of the train, and the distances between the light columns 7 and the train windows are equal.

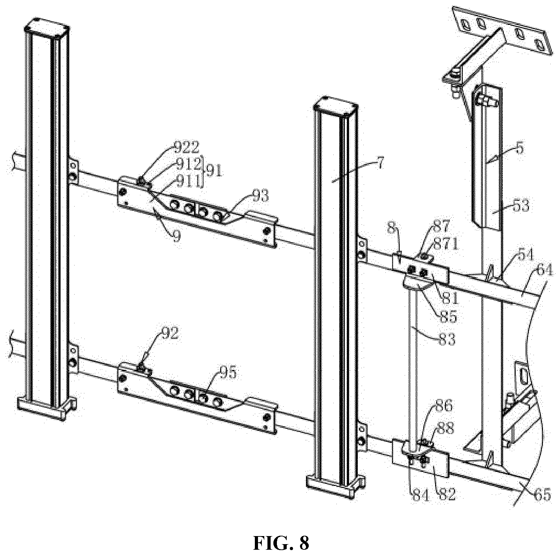

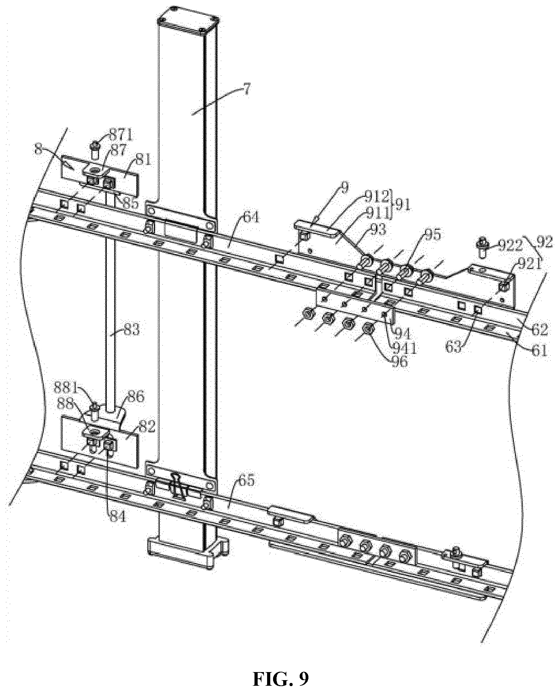

S2, installing beam steel angles 6, wherein referring to FIG. 8 and FIG. 9, two beam steel angles 6 are in a group, and multiple groups of beam steel angles 6 are arranged side by side along the length direction of the tunnel media system. The section of the beam steel angle 6 is in an L shape, the beam steel angle 6 comprises a connecting part 61 fixedly connected with the connecting plate 54 and a fixed part 62 perpendicularly and fixedly connected to the side, away from the connecting rod 53, of the connecting part 61, the connecting part 61 is placed on the connecting plate 54 and attached to the upper surface of the connecting plate 54, and the connecting part 61 and the connecting plate 54 are fixedly connected through fixed bolts, and the fixed part 62 is used for being connected with the light column 7 so as to fix the position of the light column 7. Meanwhile, installation holes 63 connected with the light columns 7 are formed in the fixed part 62 of each beam steel angle 6 at intervals along the length direction of the fixed part 62.

The two beam steel angles 6 in the same group comprise an upper beam steel angle 64 installed the connecting plate 54 at the upper part of the connecting rod 53 and a lower beam steel angle 65 installed on the connecting plate 54 at the lower part of the connecting rod 53. During installation, the two beam steel angles 6 in the same group are installed firstly, the upper beam steel angle 64 is installed on the connecting plate 54 at the upper part of the adjustable support 5, then the lower beam steel angle 65 is placed on the connecting plate 54 at the lower part of the adjustable support 5, then the upper end and the lower end of the limiting measuring tool 8 are clamped in the installation holes 63 in the corresponding positions of the upper beam steel angle 64 and the lower beam steel angle 65 respectively, the limiting measuring tool 8 is perpendicular to the two beam steel angles 6 at the same time, and finally the position of the lower beam steel angle 65 on the adjustable support 5 is fixed; the position between the upper beam steel angle 64 and the lower beam steel angle 65 in the same group can be fixed through the limiting measuring tool 8, so that the installation holes 63 in the corresponding positions of the upper beam steel angle 64 and the lower beam steel angle 65 in the same group are in the same vertical plane. Namely, the upper end and the lower end of the light column 7 installed in the installation hole 63 are located in the same vertical plane, so that the installation light columns 7 cannot incline, and the probability that the installed light columns 7 incline is greatly reduced.

Referring to FIG. 8 and FIG. 9, the limiting measuring tool 8 comprises a first limiting plate 81 attached to the side, away from the connecting rod 53, of the upper beam steel angle 64, a second limiting plate 82 attached to the side, away from the connecting rod 53, of the lower beam steel angle 65, and a connecting plate 83 arranged between the first limiting plate 81 and the second limiting plate 82. The side, facing the upper beam steel angle 64, of the first limiting plate 81 and the side, facing the lower beam steel angle 65, of the second limiting plate 82 are fixedly connected with limiting columns 84, wherein the sections of the limiting columns 84 are non-circular, and the limiting columns 84 on the first limiting plate 81 and the second limiting plate 82 are respectively matched with the installation holes 63 in the upper beam steel angle 64 and the lower beam steel angle 65 in an inserted mode. Specifically, the section of the limiting column 84 can be rectangular, oval, rhombic or in other irregular shapes, so long as the limiting column 84 is inserted into the installation hole 63, the limiting column 84 can be matched with the installation hole 63 in an inserted mode, and the limiting column 84 can be prevented from rotating in the installation hole 63, so that the upper beam steel angle 64 and the lower beam steel angle 65 are both perpendicular to the limiting measuring tool 8. In the present disclosure, the section of the limiting column 84 is rectangular. When in use, the connecting plate 83 is directly operated to insert the two limiting columns 84 into the installation holes 63 in the upper beam steel angle 64 and the lower beam steel angle 65, and the connecting plate 83 is perpendicular to the upper beam steel angle 64 and the lower beam steel angle 65 at the same time, so that the installation holes 63 in the corresponding positions of the upper beam steel angle 64 and the lower beam steel angle 65 are located in the same vertical plane.

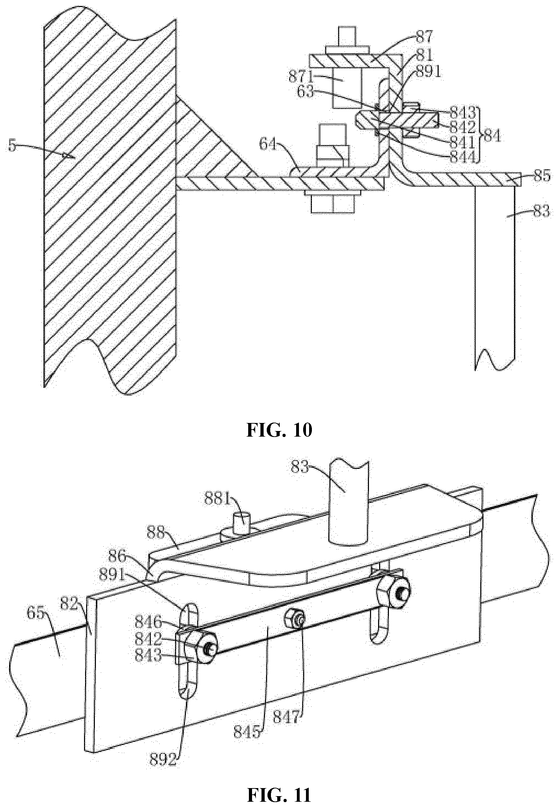

Referring to FIG. 9 and FIG. 10, the limiting column 84 comprises a rectangular clamping column 841, a screw 842 fixedly connected to one end of the clamping column 841, a clamping ring 844 fixedly connected to the outer wall of the clamping column 841 and a nut 843 in threaded connection to the screw 842, wherein the clamping ring 844 is located at the end, close to the screw 842, of the clamping column 841, the circumference of the clamping ring 844 is larger than that of the screw 842, and first clamping grooves 891 for embedding the screws 842 are formed in the first limiting plate 81 and the second limiting plate 82. When in use, the end, away from the clamping column 841, of the screw 842 is directly inserted into the first clamping groove 891, at the moment, the clamping ring 844 abuts against the first limiting plate 81 or the second limiting plate 82, then the nut 843 is screwed on the screw 842, and the nut 843 and the clamping ring 844 are clamped on the two sides of the first limiting plate 81 or the second limiting plate 82. Therefore, the position of the limiting column 84 on the first limiting plate 81 or the second limiting plate 82 is fixed, when the limiting column 84 needs to be disassembled, the nut 843 is directly screwed down from the screw 842, and detachable connection of the limiting column 84 is achieved. Due to the detachable connection of the limiting column 84, the limiting column 84 can be detached and replaced as required to meet the requirements of the installation holes 63 with different shapes and sizes, and the disclosure range is wider.

Wherein, the side, facing the connecting plate 83, of the first limiting plate 81 is perpendicularly and fixedly connected with a first auxiliary plate 85, and the first auxiliary plate 85 is located on the side, away from the limiting column 84, of the first limiting plate 81; and the side, facing the connecting plate 83, of the second limiting plate 82 is perpendicularly and fixedly connected with a second auxiliary plate 86, and the second auxiliary plate 86 is located on the side, away from the limiting column 84, of the first limiting plate 81. The connecting plate 83 is perpendicularly and fixedly connected between the first auxiliary plate 85 and the second auxiliary plate 86, the connecting plate 83 can be operated to drive the limiting columns 84 located on the first limiting plate 81 and the second limiting plate 82 to be inserted into the installation holes 63 through the first auxiliary plate 85 and the second auxiliary plate 86, and limitation of the upper beam steel angle 64 and the lower beam steel angle 65 is achieved.

Wherein, in order to prevent the limiting columns 84 from sliding out of the installation holes 63 in the upper beam steel angle 64 and the lower beam steel angle 65 under the action of external force, the relative position between the upper beam steel angle 64 and the lower beam steel angle 65 is changed. The side, away from the connecting plate 83, of the first limiting plate 81 is perpendicularly and fixedly connected with a first clamping plate 87, the first clamping plate 87 is located on the side, facing the limiting column 84, of the first limiting plate 81, a first positioning pin 871 is inserted into the first clamping plate 87 in a matched mode, the first positioning pin 871 is located on the side, away from the first limiting plate 81, of the upper beam steel angle 64, the upper beam steel angle 64 can be clamped between the first positioning pin 871 and the first limiting plate 81 through the first positioning pin 871, so that the position between the upper beam steel angle 64 and the first limiting plate 81 is fixed. The side, away from the connecting plate 83, of the second limiting plate 82 is perpendicularly and fixedly connected with a second clamping plate 88, the second clamping plate 88 is located on the side, facing the limiting column 84, of the second limiting plate 82, a second positioning pin 881 is inserted into the second clamping plate 88 in a matched mode, the second positioning pin 881 is located on the side, away from the second limiting plate 88, of the lower beam steel angle 65, the lower beam steel angle 65 can be clamped between the second positioning pin 881 and the second limiting plate 82 through the second positioning pin 881, so that the position between the lower beam steel angle 65 and the second limiting plate 82 is fixed. During installation, after the limiting columns 84 on the first limiting plate 81 and the second limiting plate 82 are inserted into the installation holes 63 in the upper beam steel angle 64 and the lower beam steel angle 65, the first positioning pin 871 is directly inserted into the first clamping plate 87, the second positioning pin 881 is directly inserted into the second clamping plate 88, the positions of the limiting measuring tool 8 and the upper beam steel angle 64 and the positions of the limiting measuring tool 8 and the lower beam steel angle 65 can be fixed, so that the installation holes 63 in the corresponding positions of the upper beam steel angle 64 and the lower beam steel angle 65 are located in the same vertical plane, the two ends of the light columns 7 installed on the upper beam steel angle 64 and the lower beam steel angle 65 are ensured to be in a vertical state, and the probability that the installed light columns 7 incline is greatly reduced.

Wherein, the number of the limiting columns 84 located on the first limiting plate 81 is two, the direction of a connecting line between the two limiting columns 84 is perpendicular to the length direction of the connecting plate 83, and the two limiting columns 84 are matched with the two installation holes 63 in the upper beam steel angle 64 in an inserted mode respectively, so that limitation of the upper beam steel angle 64 is more accurate, and relative movement of the upper beam steel angle 64 is avoided. The number of the limiting columns 84 located on the second limiting plate 82 is two, the direction of a connecting line between the two limiting columns 84 is perpendicular to the length direction of the connecting plate 83, and the two limiting columns 84 are matched with the two installation holes 63 in the lower beam steel angle 65 in an inserted mode respectively, so that limitation of the lower beam steel angle 65 is more accurate through the two limiting columns 84, and relative movement of the lower beam steel angle 65 is avoided.

In actual use, the distance between the installed upper beam steel angle 64 and the installed lower beam steel angle 65 may generate certain errors, so that the limiting column 84 located on the first limiting plate 81 and the limiting column 84 located on the second limiting plate 82 cannot be inserted into the installation holes 63 in the upper beam steel angle 64 and the lower beam steel angle 65 at the same time.

Referring to FIG. 9 and FIG. 11, two second clamping grooves 892 communicating with the first clamping grooves 891 are formed in the second limiting plate 82, and the two second clamping grooves 892 communicate with the two first clamping grooves 891 respectively, so that each first clamping groove 891 and the second clamping groove 892 communicating with the first clamping groove 891 jointly form a waist-shaped hole consistent with the connecting plate 83 in length, and the two limiting columns 84 located on the second limiting plate 82 can slide in the two waist-shaped holes, so that a certain activity space is provided. When the distance between the upper beam steel angle 64 and the lower beam steel angle 65 generates certain errors, the limiting column 84 on the second limiting plate 82 can be operated to slide in the waist-shaped hole until the limiting column 84 is inserted into the installation hole 63 in the lower beam steel angle 65, and positioning of the upper beam steel angle 64 and the lower beam steel angle 65 is achieved.

Wherein, in order to conveniently operate the limiting column 84 located on the second limiting plate 82 to slide in the waist-shaped hole, an operating panel 845 is arranged between the two limiting columns 84 located on the second limiting plate 82, the operating panel 845 is arranged on the screws 842 of the two limiting columns 84 in a sleeving mode, and the operating panel 845 is located between the nut 843 and the second limiting plate 82. A worker can drive the two limiting columns 84 to slide in the two waist-shaped holes respectively at the same time by directly applying force to the operating plate 845, and the operation is more convenient. Wherein, in order to conveniently slide the operating panel 845, the two screws 842 located on the second limiting plate 82 are sleeved with gaskets 846, and the gaskets 846 are located between the second limiting plate 82 and the operating panel 845, so that a certain gap is reserved between the operating panel 845 and the second limiting plate 82, and the operation is more convenient and labor-saving.

Meanwhile, in order to fix the position of the operating panel 845 on the second limiting plate 82 and prevent the operating panel 845 from driving the two limiting columns 84 to slide in the waist-shaped holes under the action of external force, the operating panel 845 is in threaded connection with an abutting screw 847, and the abutting screw 847 can abut against the side, away from the clamping ring 844, of the second limiting plate 82, so that the second limiting plate 82 is clamped between the abutting screw 847 and the clamping ring 844, and the position of the operating panel 845 relative to the second limiting plate 82 is fixed.

S3, sequentially installing the rest of the beam steel angles 6 on the adjustable support 5;
specifically, S31, determining the distance between two adjacent upper beam steel angles 64 and the distance between two adjacent lower beam steel angles 65 through horizontal measuring tools 9.

After the first group of beam steel angles 6 is installed, the rest of beam steel angles 6 need to be installed in sequence, and as the installation length of the tunnel media system is fixed, when two adjacent upper beam steel angles 64 and two adjacent lower beam steel angles 65 are connected through bolts, due to the fact that the difference between the diameter of the bolt and the diameter of the threaded hole is generally 2 mm, a certain error exists between the upper beam steel angle 64 or the lower beam steel angle 65 after installation, when the error is accumulated to a certain value, the overall length of the tunnel media system can be affected, and meanwhile, when the errors of the upper beam steel angle 64 and the lower beam steel angle 65 are inconsistent, the light columns 7 installed in the corresponding installation holes 63 can incline. In order to ensure that the distance between two adjacent upper beam steel angles 64 and two adjacent lower beam steel angles 65 is fixed and reduce errors generated during installation, the two adjacent upper beam steel angles 64 or two adjacent lower beam steel angles 65 need to be installed by means of the horizontal measuring tools 9, and the distance between two adjacent upper beam steel angles 64 and two adjacent lower beam steel angles 65 can be fixed through the horizontal measuring tools 9.

Referring to FIG. 8 and FIG. 9, the horizontal measuring tool 9 comprises a clamping plate 91 and a fixed part 92, wherein the clamping plate 91 is integrally U-shaped, opposite ends of two adjacent upper beam steel angles 64 or two adjacent lower beam steel angles 65 can be embedded into the clamping plate 91, the fixed part 92 is used for fixing the positions of the upper beam steel angles 64 or the lower beam steel angles 65 in the clamping plate 91, and the fixed part 92 is located in a U-shaped opening of the clamping plate 91. During installation, the opposite ends of the two adjacent upper beam steel angles 64 or the two adjacent lower beam steel angles 65 are directly placed in the U-shaped openings of the clamping plates 91, and then the positions of the two upper beam steel angles 64 or the two lower beam steel angles 65 in the clamping plate 91 are fixed through the fixed part 92.

Wherein, the clamping plate 91 comprises a main plate 911 and two side plates 912 perpendicularly and fixedly connected to the two sides of the main plate 911, the fixed part 92 comprises two clamping columns 921 fixedly connected to the sides, facing the two side plates 912, of the main plate 911, the section of the clamping column 921 is consistent with the installation hole 63 in shape and are rectangula, and the clamping columns 921 are matched with the installation holes 63 in an inserted mode and cannot shake in the installation holes 63. During installation, two adjacent upper beam steel angles 64 or two adjacent lower beam steel angles 65 are directly placed in the U-shaped openings of the clamping plates 91, and the two clamping columns 921 are inserted into the installation holes 63 in the two adjacent upper beam steel angles 64 or the two adjacent lower beam steel angles 65 respectively. Due to the fact that the clamping column 921 cannot slide in the installation hole 63, the relative position between two adjacent upper beam steel angles 64 or two adjacent lower beam steel angles 65 can be fixed.

Meanwhile, the situation that under the action of external force, the two adjacent upper beam steel angles 64 or the two adjacent lower beam steel angles 65 slide out of the U-shaped openings of the clamping plates 91, so that the clamping column 921 falls out of the installation hole 63, and positioning between the two adjacent upper beam steel angles 64 or the two adjacent lower beam steel angles 65 is affected is avoided. A limiting pin 922 is inserted into one side plate 912 in a matched mode and located on the side, away from the main plate 911, of the upper beam steel angle 64 or the lower beam steel angle 65, and the upper beam steel angle 64 or the lower beam steel angle 65 can be fixed between the limiting pin 922 and the main plate 911 through the limiting pin 922, so that the positions of the upper beam steel angle 64 and the lower beam steel angle 65 are fixed.

S32, after the position between two adjacent upper beam steel angles 64 or two adjacent lower beam steel angles 65 is fixed through the horizontal measuring tools 9, detecting the positions of the installation holes 63 at the corresponding positions of the upper beam steel angle 64 and the lower beam steel angle 65 in the same group by using the limiting measuring tools 8; and detecting the relative positions of the upper beam steel angle 64 and the lower beam steel angle 65 of each group through the limiting measuring tool 8, so that the two installation holes 63 of the same group in the corresponding positions are located in the same vertical plane, and then fixing the positions of the upper beam steel angle 64 and the lower beam steel angle 65 of the group on the adjustable support 5.

S33, connecting two adjacent upper beam steel angles 64 or two adjacent lower beam steel angles 65 through assembly plates 94, and then taking down the horizontal measuring tools 9 between the two adjacent upper beam steel angles 64 or the two adjacent lower beam steel angles 65.

Referring to FIG. 9, the assembly plate 94 is plate-shaped, at least two assembly holes 941 are formed in the assembly plate 94, and the two assembly holes 941 correspond to the installation holes 63 in the opposite ends of the two adjacent upper beam steel angles 64 or the two adjacent lower beam steel angles 65 respectively. In the present disclosure, four assembly holes 941 are taken as an example, two installation holes 63 formed in the end part of each upper cross beam steel angle 64 or lower cross beam steel angle 65 correspond to the assembly holes 941. A connecting bolt 95 is arranged in the assembly hole 941 in a penetrating mode, and a connecting nut 96 is connected to the connecting bolt 95 in a threaded mode. The connecting bolts 95 penetrate through the installation holes 63 and the assembly holes 941 in the end parts of the upper beam steel angles 64 or the lower beam steel angles 65 at the same time, so that the assembly plate 94 can be connected with the two adjacent upper beam steel angles 64 or the assembly plate 94 can be connected with the two adjacent lower beam steel angles 65 through the connecting bolts 95 and the connecting nuts 96.

Meanwhile, in order to prevent the distance between two adjacent upper beam steel angles 64 or two adjacent lower beam steel angles 65 from changing in the installation process of the assembly plate 94, during installation, the two adjacent upper beam steel angles 64 or the two adjacent lower beam steel angles 65 are connected through the assembly plate 94, and then the horizontal measuring tools 9 are taken down. Therefore, an avoiding groove 93 for embedding the assembly plate 94 is formed in one side of the clamping plate 91, and the avoiding groove 93 is formed in the middle of one side plate 912 where the limiting pin 922 is inserted and the main plate 911 at the same time. During installation, the assembly plate 94 is directly placed at the joint of the two upper beam steel angles 64 or the two lower beam steel angles 65 from the avoiding groove 93, and the two upper beam steel angles 64 and the assembly plate 94 or the two lower beam steel angles 65 and the assembly plate 94 are connected together through the connecting bolts 95. Therefore, the relative position between two adjacent upper beam steel angles 64 or two adjacent lower beam steel angles 65 can be fixed, and then the horizontal measuring tools 9 are taken down. Circulation is conducted in sequence until all the adjustable supports 5 are installed completely.

S4, installing the light columns 7 at the installation holes 63 at the corresponding positions of the upper and lower beam steel angles 6 through bolts.

The implementation principle of the installing and positioning method for light columns of a tunnel media system is that the relative position relation between the upper beam steel angles 64 and the lower beam steel angles 65 can be fixed through the limiting measuring tools 8, so that the installation holes 63 in the upper beam steel angle 64 and the lower beam steel angle 65 in the same group are located in the same vertical plane, and the probability that the installed light columns 7 incline is reduced. The relative position between two adjacent upper beam steel angles 64 or two adjacent lower beam steel angles 65 can be fixed through the horizontal measuring tools 9, errors caused by connection of the two steel angles are reduced, and it is guaranteed that the length of the installed upper beam steel angles 64 or the installed lower beam steel angle 65 is consistent with that of the tunnel media system, and then the installation holes 63 in the corresponding positions of the upper beam steel angle 64 and the lower beam steel angle 65 of each group are in the same vertical plane, the upper beam steel angle 64 and the lower beam steel angle 65 of each group are detected through the limiting measuring tool 8, the two ends of each installed light column 7 are located in the same plane, and the probability that the installed light columns 7 incline is greatly reduced. Meanwhile, when the adjustable support 5 is installed, the distances between the adjustable supports 5 and the limiting tool 4 are adjusted to be consistent, and the inclination degree of the adjustable support 5 is consistent with that of the limiting tool, so that the distances between the light columns 7 installed on the adjustable support 5 and the train window are consistent, and the inclination degree of the adjustable support 5 is consistent with that of the train, so that the video animation played by the installed tunnel media system is attached to the train window, and the display effect is better.

## Claims

1. An installing and positioning method for light columns of a tunnel media system, comprising following steps:
S1, installing an adjustable support (5);
S2, installing a first group of beam steel angles (6), comprising following steps:
forming installation holes (63) in each beam steel angle (6) at intervals along a length direction of each beam steel angle (6),
firstly installing a first beam steel angle (6), called an upper beam steel angle, on a connecting plate on an upper side of the adjustable support (5),
then installing a second beam steel angle (6), called a lower beam steel angle, on a connecting plate (54) on a lower side of the adjustable support (5),
and clamping upper ends and lower ends of a limiting measuring tool (8) in the installation holes (63) in corresponding positions of upper and lower beam steel angles (6) respectively in which the limiting measuring tool (8) is perpendicular to the two beam steel angles (6) at the same time,
and finally fixing the position of the beam steel angle (6) located on the connecting plate (54) on the lower side on the adjustable support (5); **characterized in that**,
the limiting measuring tool (8) comprises a first limiting plate (81) attached to a side, away from the adjustable support (5), of the upper beam steel angle (64),
a second limiting plate (82) attached to a side, away from the adjustable support (5), of the lower beam steel angle (65),
and a connecting plate (83) arranged between the first limiting plate (81) and the second limiting plate (82),
a side, facing the upper beam steel angle (64), of the first limiting plate (81) and a side, facing the lower beam steel angle (65), of the second limiting plate (82) are fixedly connected with limiting columns (84),
sections of the limiting columns (84) are non-circular,
and the limiting columns (84) on the first limiting plate (81) and the second limiting plate (82) are respectively matched with the installation holes (63) in the upper beam steel angle (64) and the lower beam steel angle (65) in an inserted mode;
and a side, away from the connecting plate (83) of the limiting measuring tool (8), of the first limiting plate (81) is fixedly connected with a first clamping plate (87),
a first positioning pin (871) is inserted into the first clamping plate (87),
the upper beam steel angle (64) is located between the first positioning pin (871) and the first limiting plate (81),
a side, facing the connecting plate (83) of the limiting measuring tool (8), of the second limiting plate (82) is fixedly connected with a second clamping plate (88),
a second positioning pin (881) is inserted into the second clamping plate (88),
and the lower beam steel angle (65) is located between the second positioning pin (881) and the second limiting plate (82);
S3, sequentially installing, side by side along the length direction of the tunnel media system, the rest of the groups of beam steel angles (6) on the adjustable support (5) in a likewise manner as shown in S2; and
S4, installing the light columns (7) at the installation holes (63) at the corresponding positions of the upper and lower beam steel angles (6).

2. The installing and positioning method for light columns of a tunnel media system according to claim 1, wherein S3 specifically comprises a following step:
S31, determining a distance between two adjacent upper beam steel angles (64) and a distance between two adjacent lower beam steel angles (65) through horizontal measuring tools (9).

3. The installing and positioning method for light columns of a tunnel media system according to claim 2, wherein the horizontal measuring tool (9) comprises a clamping plate (91) which is integrally U-shaped, the clamping plate (91) is connected to opposite ends of two adjacent upper beam steel angles (64) or two adjacent lower beam steel angles (65), and the clamping plate (91) is provided with a fixed part (92) for fixing the upper beam steel angle (64) or the lower beam steel angle (65) in the clamping plate (91).

4. The installing and positioning method for light columns of a tunnel media system according to claim 3, wherein the clamping plate (91) comprises a main plate (911) and two side plates (912) perpendicularly and fixedly connected to two sides of the main plate (911), the fixed part (92) comprises a clamping column (921) arranged on a side, facing the side plate (912), of the main plate (911), and the clamping column (921) is matched with the installation hole (63) in an inserted mode.

5. The installing and positioning method for light columns of a tunnel media system according to claim 4, wherein the fixed part (92) further comprises a limiting pin (922) connected to one of the side plates (912) in an inserted mode, and the upper beam steel angle (64) or the lower beam steel angle (65) is located between the limiting pin (922) and the main plate (911).

6. The installing and positioning method for light columns of a tunnel media system according to claim 2, wherein S3 further comprises a following step:
S32, detecting relative positions of the upper beam steel angle (64) and the lower beam steel angle (65) of each group through the limiting measuring tool (8), so that two installation holes (63) of the same group are located in a same vertical plane, and then fixing positions of the upper beam steel angle (64) and the lower beam steel angle (65) of the group on the adjustable support (5).

7. The installing and positioning method for light columns of a tunnel media system according to claim 2, wherein S3 further comprises a following step:
S33, connecting two adjacent upper beam steel angles (64) or two adjacent lower beam steel angles (65) through assembly plates (94), and then taking down the horizontal measuring tools (9) between the two adjacent upper beam steel angles (64) or the two adjacent lower beam steel angles (65).

8. The installing and positioning method for light columns of a tunnel media system according to claim 7, wherein S1 specifically comprises following steps:
S11, placing a trolley (1) on a track, installing a tripod (2) on the trolley (1), installing a level gauge (3) on the tripod (2), and installing a limiting tool (4) on the trolley (1), wherein the limiting tool (4) is perpendicular to the trolley (1);
S12, installing an adjustable support (5) on a side wall of a tunnel, and adjusting the level gauge (3), so that laser rays emitted by the level gauge (3) are located at a fixed position of the adjustable support (5);
S13, adjusting the adjustable support (5), so that a linear distance from an upper end of the adjustable support (5) to the limiting tool (4) is the same as that from a lower end of the adjustable support (5) to the limiting tool (4); and
S14, pushing the trolley (1) to advance on the track, installing a next adjustable support (5), so that the laser rays emitted by the level gauge (3) are located at fixed positions of the adjustable support (5), a linear distance from an upper end of the adjustable support (5) to the limiting tool (4) is the same as that from a lower end of the adjustable support (5) to the limiting tool (4), and circulation is conducted in sequence until all the adjustable supports (5) are installed completely.

## Patentansprüche

1. Montage- und Positionierungsverfahren für Lichtsäulen eines Tunnelmediensystems, mit folgenden Schritten:
S1, Montieren eines verstellbaren Trägers (5);
S2, Montieren einer ersten Gruppe von Trägerstahlwinkeln (6), mit folgenden Schritten:
Bilden von Montagelöchern (63) in jedem Trägerstahlwinkel (6) in Abständen entlang einer Längsrichtung eines jeden Trägerstahlwinkels (6),
zuerst Montieren eines als oberer Trägerstahlwinkel bezeichneten, ersten Trägerstahlwinkels (6) an einer Anschlussplatte auf einer oberen Seite des verstellbaren Trägers (5),
dann Montieren eines als unterer Trägerstahlwinkel bezeichneten, zweiten Trägerstahlwinkels (6) auf einer Anschlussplatte (54) auf einer unteren Seite des verstellbaren Trägers (5),
und Festklemmen von oberen Enden und unteren Enden eines Begrenzungsmesswerkzeugs (8) in den Montagelöchern (63) in entsprechenden Positionen von oberen bzw. unteren Trägerstahlwinkeln (6), in denen das Begrenzungsmesswerkzeug (8) gleichzeitig senkrecht zu den beiden Trägerstahlwinkeln (6) ist,
und schließlich Festlegen der Position des Trägerstahlwinkels (6), der auf der Anschlussplatte (54) auf der unteren Seite auf dem verstellbaren Träger (5) angeordnet ist; **dadurch gekennzeichnet, dass**
das Begrenzungsmesswerkzeug (8) eine erste Begrenzungsplatte (81), die an einer von dem verstellbaren Träger (5) wegweisenden Seite des oberen Trägerstahlwinkels (64) befestigt ist,
eine zweite Begrenzungsplatte (82), die an einer von dem verstellbaren Träger (5) wegweisenden Seite des unteren Trägerstahlwinkels (65) befestigt ist,
und eine Verbindungsplatte (83), die zwischen der ersten Begrenzungsplatte (81) und der zweiten Begrenzungsplatte (82) angeordnet ist, aufweist,
eine dem oberen Trägerstahlwinkel (64) zugekehrte Seite der ersten Begrenzungsplatte (81) und eine dem unteren Trägerstahlwinkel (65) zugekehrte Seite der zweiten Begrenzungsplatte (82) fest mit Begrenzungssäulen (84) verbunden werden,
Abschnitte der Begrenzungssäulen (84) unrund sind,
und die Begrenzungssäulen (84) auf der ersten Begrenzungsplatte (81) und der zweiten Begrenzungsplatte (82) mit den Montagelöchern (63) in dem oberen Trägerstahlwinkel (64) bzw. dem unteren Trägerstahlwinkel (65) im eingeführten Zustand gepaart sind;
und eine von der Verbindungsplatte (83) des Begrenzungsmesswerkzeugs (8) wegweisende Seite der ersten Begrenzungsplatte (81) fest mit einer ersten Klemmplatte (87) verbunden wird,
ein erster Positionierungsstift (871) in die erste Klemmplatte (87) eingesetzt wird,
der obere Trägerstahlwinkel (64) zwischen dem ersten Positionierungsstift (871) und der ersten Begrenzungsplatte (81) angeordnet wird,
eine der Verbindungsplatte (83) des Begrenzungsmesswerkzeugs (8) zugekehrte Seite der zweiten Begrenzungsplatte (82) fest mit einer zweiten Klemmplatte (88) verbunden wird,
ein zweiter Positionierungsstift (881) in die zweite Klemmplatte (88) eingesetzt wird,
und der untere Trägerstahlwinkel (65) zwischen dem zweiten Positionierungsstift (881) und der zweiten Begrenzungsplatte (82) angeordnet wird;
S3, der Reihe nach Montieren des Restes der Gruppen von Trägerstahlwinkeln (6) auf dem verstellbaren Träger (5) Seite an Seite entlang der Längsrichtung des Tunnelmediensystems auf eine ähnliche Art und Weise wie in S2 gezeigt; und
S4, Montieren der Lichtsäulen (7) an den Montagelöchern (63) an den entsprechenden Positionen der oberen und unteren Trägerstahlwinkeln (6).

2. Montage- und Positionierungsverfahren für Lichtsäulen eines Tunnelmediensystems nach Anspruch 1, bei dem speziell S3 folgenden Schritt aufweist:
S31, Bestimmen einer Entfernung zwischen zwei benachbarten oberen Trägerstahlwinkeln (64) und einer Entfernung zwischen zwei benachbarten unteren Trägerstahlwinkeln (65) über horizontale Messwerkzeuge (9).

3. Montage- und Positionierungsverfahren für Lichtsäulen eines Tunnelmediensystems nach Anspruch 2, bei dem das horizontale Messwerkzeug (9) eine Klemmplatte (91) aufweist, die einstückig U-förmig ist, die Klemmplatte (91) mit entgegengesetzten Enden von zwei benachbarten oberen Trägerstahlwinkeln (64) oder zwei benachbarten unteren Trägerstahlwinkeln (65) verbunden ist, und die Klemmplatte (91) mit einem festen Teil (92) zum Befestigen des oberen Trägerstahlwinkels (64) oder des unteren Trägerstahlwinkels (65) in der Klemmplatte (91) versehen ist.

4. Montage- und Positionierungsverfahren für Lichtsäulen eines Tunnelmediensystems nach Anspruch 3, bei dem die Klemmplatte (91) eine Hauptplatte (911) und zwei Seitenplatten (912) aufweist, die senkrecht und fest mit zwei Seiten der Hauptplatte (911) verbunden sind, der feste Teil (92) eine Klemmsäule (921) aufweist, die auf einer der Seitenplatte (912) zugekehrten Seite der Hauptplatte (911) angeordnet ist, und die Klemmsäule (921) mit dem Montageloch (63) im eingeführten Zustand gepaart ist.

5. Montage- und Positionierungsverfahren für Lichtsäulen eines Tunnelmediensystems nach Anspruch 4, bei dem der feste Teil (92) ferner einen Begrenzungsstift (922) aufweist, der mit einer der Seitenplatten (912) im eingeführten Zustand verbunden ist, und der obere Trägerstahlwinkel (64) oder der untere Trägerstahlwinkel (65) zwischen dem Begrenzungsstift (922) und der Hauptplatte (911) angeordnet ist.

6. Montage- und Positionierungsverfahren für Lichtsäulen eines Tunnelmediensystems nach Anspruch 2, bei dem S3 ferner folgenden Schritt aufweist:
S32, Ermitteln von jeweiligen Positionen des oberen Trägerstahlwinkels (64) und des unteren Trägerstahlwinkels (65) einer jeden Gruppe über das Begrenzungsmesswerkzeug (8), so dass zwei Montagelöcher (63) der gleichen Gruppe in einer gleichen Vertikalebene angeordnet sind, und dann Festlegen von Positionen des oberen Trägerstahlwinkels (64) und des unteren Trägerstahlwinkels (65) der Gruppe auf dem verstellbaren Träger (5).

7. Montage- und Positionierungsverfahren für Lichtsäulen eines Tunnelmediensystems nach Anspruch 2, bei dem S3 ferner folgenden Schritt aufweist:
S33, Verbinden von zwei benachbarten oberen Trägerstahlwinkeln (64) oder zwei benachbarten unteren Trägerstahlwinkeln (65) über zwei Montageplatten (94), und dann Herunternehmen der horizontalen Messwerkzeugen (9) zwischen den beiden benachbarten oberen Trägerstahlwinkeln (64) oder den beiden benachbarten unteren Trägerstahlwinkeln (65).

8. Montage- und Positionierungsverfahren für Lichtsäulen eines Tunnelmediensystems nach Anspruch 7, bei dem speziell S1 folgende Schritte aufweist:
S11, Platzieren eines Wagens (1) auf einem Schienengleis, Montieren eines Stativs (2) auf dem Wagen (1), Montieren eines Nivelliergerätes (3) auf dem Stativ (2), und Montieren eines Begrenzungswerkzeugs (4) auf dem Wagen (1), wobei das Begrenzungswerkzeug (4) senkrecht zu dem Wagen (1) ist;
S12, Montieren eines verstellbaren Trägers (5) auf eine Seitenwand eines Tunnels, und Einstellen des Nivelliergerätes (3) so, dass von dem Nivelliergerät (3) ausgestrahlte Laserstrahlen an einer festen Position des verstellbaren Trägers (5) angeordnet sind;
S 13, Einstellen des verstellbaren Trägers (5) so, dass eine lineare Entfernung von einem oberen Ende des verstellbaren Trägers (5) bis zu dem Begrenzungswerkzeug (4) die gleiche ist wie diejenige von einem unteren Ende des verstellbaren Trägers (5) bis zu dem Begrenzungswerkzeug (4); und
S14, Anschieben des Wagens (1) um ihn auf dem Schienengleis vorwärts zu bewegen, Montieren eines nächsten verstellbaren Trägers (5), so dass die von dem Nivelliergerät (3) ausgestrahlten Laserstrahlen an festen Positionen des verstellbaren Trägers (5) angeordnet sind, eine lineare Entfernung von einem oberen Ende des verstellbaren Trägers (5) bis zu dem Begrenzungswerkzeug (4) die gleiche ist wie diejenige von einem unteren Ende des verstellbaren Trägers (5) bis zu dem Begrenzungswerkzeug (4), und Zirkulation wird der Reihe nach durchgeführt, bis alle verstellbaren Träger (5) vollständig montiert sind.

## Revendications

1. Procédé d'installation et de positionnement de colonnes lumineuses d'un système de média d'un tunnel, comprenant les étapes suivantes :
S1, installation d'un support réglable (5) ;
S2, installation d'un premier groupe de cornières en acier (6), comprenant les étapes suivantes :
formation de trous d'installation (63) dans chaque cornière en acier (6) à intervalles le long d'une direction longitudinale de chaque cornière en acier (6),
installation tout d'abord d'une première cornière en acier (6), appelée cornière en acier supérieure, sur une plaque de connexion sur un côté supérieur du support réglable (5),
puis installation d'une deuxième cornière en acier (6), appelée cornière en acier inférieure, sur une plaque de connexion (54) sur un côté inférieur du support réglable (5), et
serrage des extrémités supérieures et des extrémités inférieures d'un outil de mesure de limitation (8) dans les trous d'installation (63) dans les positions correspondantes des cornières en acier supérieures et inférieures (6) respectivement, l'outil de mesure de limitation (8) étant perpendiculaire en même temps aux deux cornières en acier (6),
et pour finir, fixation de la position de la cornière en acier (6) située sur la plaque de connexion (54) sur le côté inférieur du support réglable (5) ; **caractérisé en ce que**
l'outil de mesure de limitation (8) comprend une première plaque de limitation (81) fixée sur un côté de la cornière en acier supérieur (64) éloigné du support réglable (5),
une deuxième plaque de limitation (82) fixée sur un côté de la cornière en acier inférieure (65) éloigné du support réglable (5),
et une plaque de connexion (83) disposée entre la première plaque de limitation (81) et la deuxième plaque de limitation (82),
un côté de la première plaque de limitation (81) qui fait face à la cornière en acier supérieure (64), et un côté de la deuxième plaque de limitation (82) qui fait face à la cornière en acier inférieure (65) sont reliés fixement à des colonnes de limitation (84),
des sections des colonnes de limitation (84) ne sont pas circulaires,
et les colonnes de limitation (84) sur la première plaque de limitation (81) et sur la deuxième plaque de limitation (82) sont respectivement ajustées aux trous d'installation (63) de la cornière en acier supérieure (64) et de la cornière en acier inférieure (65) dans un mode inséré ;
et un côté de la première plaque de limitation (81) éloigné de la plaque de connexion (83) de l'outil de mesure de limitation (8) est relié fixement à une première plaque de serrage (87),
une première goupille de positionnement (871) est insérée dans la première plaque de serrage (87),
la cornière en acier supérieure (64) est située entre la première goupille de positionnement (871) et la première plaque de limitation (81),
un côté de la deuxième plaque de limitation (82) faisant face à la plaque de connexion (83) de l'outil de mesure de limitation (8) est relié fixement à une deuxième plaque de serrage (88),
une deuxième goupille de positionnement (881) est insérée dans la deuxième plaque de serrage (88),
et la cornière en acier inférieure (65) est située entre la deuxième goupille de positionnement (881) et la deuxième plaque de limitation (82) ;
S3, installation de façon séquentielle, côte à côte le long de la direction longitudinale du système de média du tunnel, des autres groupes de cornières en acier (6) sur le support réglable (5) de la même manière qu'en S2 ; et
S4, installation des colonnes lumineuses (7) dans les trous d'installation (63) aux positions correspondantes des cornières en acier (6) supérieure et inférieure.

2. Procédé d'installation et de positionnement de colonnes lumineuses d'un système de média d'un tunnel selon la revendication 1, dans lequel S3 comprend spécifiquement l'étape suivante :
S31, détermination d'une distance entre deux cornières supérieures adjacentes (64) et d'une distance entre deux cornières inférieures adjacentes (65) à l'aide d'outils de mesure horizontaux (9).

3. Procédé d'installation et de positionnement de colonnes lumineuses d'un système média d'un tunnel selon la revendication 2, dans lequel l'outil de mesure horizontal (9) comprend une plaque de serrage (91) qui est intégralement en forme de U, la plaque de serrage (91) est reliée aux extrémités opposées de deux cornières en acier supérieures adjacentes (64) ou de deux cornières en acier inférieures adjacents (65), et la plaque de serrage (91) est pourvue d'une partie fixe (92) pour fixer la cornière en acier supérieure (64) ou la cornière en acier inférieure (65) dans la plaque de serrage (91).

4. Procédé d'installation et de positionnement de colonnes lumineuses d'un système de média d'un tunnel selon la revendication 3, dans lequel la plaque de serrage (91) comprend une plaque principale (911) et deux plaques latérales (912) reliées perpendiculairement et fixement à deux côtés de la plaque principale (911), la partie fixe (92) comprend une colonne de serrage (921) disposée sur un côté, faisant face à la plaque latérale (912), de la plaque principale (911), et la colonne de serrage (921) est ajustée au trou d'installation (63) dans un mode inséré.

5. Procédé d'installation et de positionnement de colonnes lumineuses d'un système de média d'un tunnel selon la revendication 4, dans lequel la partie fixe (92) comprend en outre une goupille de limitation (922) reliée à l'une des plaques latérales (912) dans un mode inséré, et la cornière en acier supérieure (64) ou la cornière en acier inférieure (65) est située entre la goupille de limitation (922) et la plaque principale (911).

6. Procédé d'installation et de positionnement de colonnes lumineuses d'un système de média d'un tunnel selon la revendication 2, dans lequel S3 comprend en outre une étape suivante :
S32, détection des positions relatives de la cornière en acier supérieure (64) et de la cornière en acier inférieure (65) de chaque groupe au moyen de l'outil de mesure de limitation (8), de sorte que deux trous d'installation (63) du même groupe soient situés dans un même plan vertical, puis fixation des positions de la cornière en acier supérieure (64) et de la cornière en acier inférieure (65) du groupe sur le support réglable (5).

7. Procédé d'installation et de positionnement de colonnes lumineuses d'un système de média d'un tunnel selon la revendication 2, dans lequel S3 comprend en outre une étape suivante :
S33, connexion de deux cornières en acier supérieures adjacentes (64) ou de deux cornières en acier inférieures adjacentes (65) au moyen des plaques d'assemblage (94), puis démontage des outils de mesure horizontaux (9) entre les deux cornières en acier supérieures adjacentes (64) ou les deux cornières en acier inférieures adjacentes (65).

8. Procédé d'installation et de positionnement de colonnes lumineuses d'un système de média d'un tunnel selon la revendication 7, dans lequel S1 comprend spécifiquement les étapes suivantes :
S11, mise en place d'un chariot (1) sur une voie, installation d'un trépied (2) sur le chariot (1), installation d'une jauge de niveau (3) sur le trépied (2), et installation d'un outil de limitation (4) sur le chariot (1), l'outil de limitation (4) étant perpendiculaire au chariot (1) ;
S12, installation d'un support réglable (5) sur une paroi latérale d'un tunnel, et réglage de la jauge de niveau (3), de sorte que des rayons laser émis par la jauge de niveau (3) soient situés à une position fixe du support réglable (5) ;
S13, réglage du support réglable (5), de sorte qu'une distance linéaire entre une extrémité supérieure du support réglable (5) et l'outil de limitation (4) soit la même que celle entre une extrémité inférieure du support réglable (5) et l'outil de limitation (4) ;
S14, poussée du chariot (1) pour l'avancer sur la voie, installation d'un support réglable suivant (5), de sorte que les rayons laser émis par la jauge de niveau (3) soient situés à des positions fixes du support réglable (5), qu'une distance linéaire entre une extrémité supérieure du support réglable (5) et l'outil de limitation (4) soit la même que celle entre une extrémité inférieure du support réglable (5) et l'outil de limitation (4), et la circulation est effectuée en séquence jusqu'à ce que tous les supports réglables (5) soient complètement installés.
